# FASCICULE DE BREVET EUROPEEN

(11) **EP 2 870 424 B1**
(45) Date de publication et mention de la délivrance du brevet: **06.01.2016**
(21) Numéro de dépôt: 13734725.8
(22) Date de dépôt: 03.07.2013
(51) Int. Cl.: F27D 3/18, F27D 19/00, F27B 1/20, F27B 1/26, B65G 53/16, B65G 53/22, B65G 53/66

(54) **INSTALLATION DE DISTRIBUTION DE MATIERE PULVERULENTE PAR TRANSPORT PNEUMATIQUE COMPORTANT UN DISPOSITIF DE DEPRESSURISATION D'UN RESERVOIR SOUS PRESSION DE STOCKAGE DE LADITE MATIERE**
ANLAGE ZUR VERTEILUNG PULVERFÖRMIGER STOFFE DURCH PNEUMATISCHEN TRANSPORT MIT EINER VORRICHTUNG ZUR DRUCKENTLASTUNG EINES UNTER DRUCK STEHENDEN BEHÄLTERS ZUR LAGERUNG DIESES STOFFES
INSTALLATION FOR DISTRIBUTING PULVERULENT SUBSTANCE BY PNEUMATIC TRANSPORTATION, COMPRISING A DEVICE FOR DEPRESSURIZING A PRESSURIZED RESERVOIR IN WHICH SAID SUBSTANCE IS STORED

(30) Priorité: 06.07.2012 LU 92037
(43) Date de publication de la demande: 13.05.2015
(73) Titulaire: Paul Wurth S.A., 1122 Luxembourg (LU)
(72) Inventeur: MAHOWALD, Pierre, L-8224 Mamer (LU); MULLER, Ben, L-8041 Strassen (LU); SCHMIT, Louis, L-1456 Luxembourg (LU)
(74) Mandataire: Office Freylinger
(86) Numéro de dépôt international: PCT/EP2013/063992
(87) Numéro de publication internationale: WO 2014/006073

(56) Documents cités:
- JP-A- 58 011 421
- JP-A- 63 001 631

## Description

### Domaine technique

La présente invention concerne une installation de distribution de matière granuleuse ou pulvérulente par transport pneumatique, telle que par exemple une installation d'injection de charbon dans un haut-fourneau, comportant au moins un silo d'envoi pour assurer un stockage temporaire de ladite matière granuleuse ou pulvérulente. Les silos d'envoi sont mis sous pression pour assurer leur vidange, et ils doivent être dépressurisés pour permettre leur remplissage.

L'invention concerne plus particulièrement les moyens permettant la dépressurisation du silo d'envoi avant leur remplissage.

### Etat de la technique

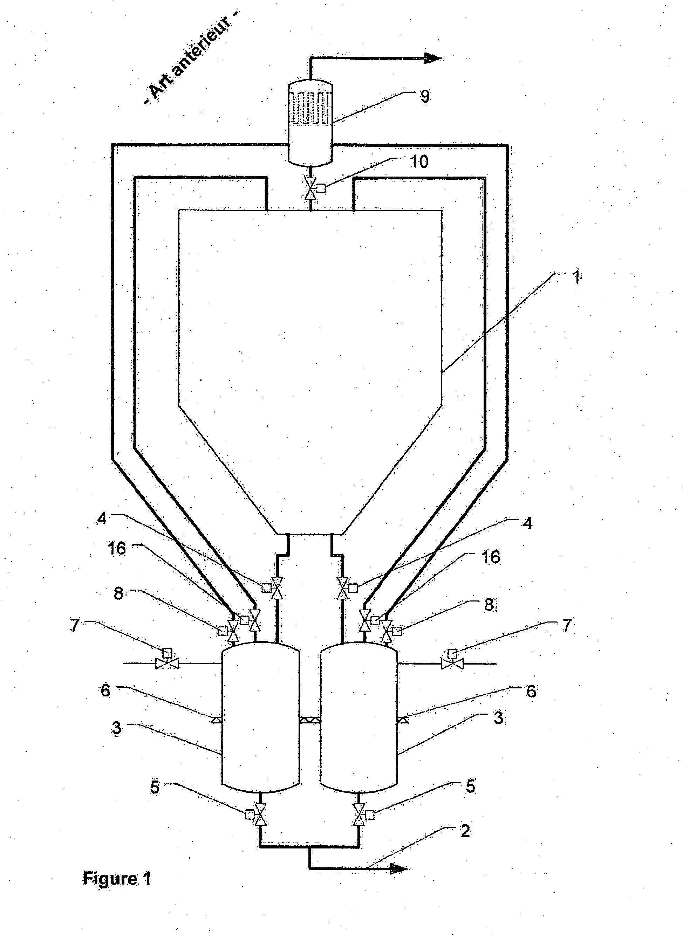

Il est bien connu, par exemple par EP 0 079 444 ou EP 0 212 296, d'injecter des matériaux granulés ou pulvérulents, notamment du charbon pulvérulent, dans un haut-fourneau. Ces matériaux sont classiquement transportés pneumatiquement. Typiquement, dans un haut-fourneau, du charbon pulvérulent peut être injecté au niveau de chaque tuyère ou au moins dans plusieurs tuyères. Une telle installation de transport et d'injection est montrée dans la figure 1 où, pour simplifier le dessin, on a représenté une seule ligne d'envoi vers les tuyères, étant entendu qu'il peut y avoir plusieurs de ces lignes raccordées en aval d'un même silo de stockage principal 1. Le charbon est alimenté à partir du silo de stockage principal 1 maintenu à pression atmosphérique, et distribué vers chaque point d'injection par une ligne 2 d'envoi pneumatique qui se divise à proximité du haut-fourneau en une pluralité de lignes d'injection connectée chacune à un point d'injection. Le charbon peut aussi être transporté par la ligne d'envoi vers un autre réservoir maintenu sous pression constante, alors appelé « silo d'injection », se trouvant à proximité du haut-fourneau. Les lignes d'injection sont alors connectées à ce silo d'injection. Les installations de transport et d'injection comportent classiquement des réservoirs de stockage temporaire sous pression, ou silos d'envoi, adaptés pour contenir ledit matériau et mis sous pression par un gaz de transport, par exemple de l'azote. Ce gaz permet de fluidiser le matériau pulvérulent et d'en assurer le transport jusqu'à son point d'utilisation, situé classiquement dans la tuyère.

Il est déjà connu de contrôler le débit total de charbon envoyé vers le haut-fourneau par une mesure de débit et une vanne de régulation, tandis que les flux individuels vers les différentes tuyères ne sont pas contrôlés, même si différentes mesures sont mises en place pour assurer une bonne équirépartition dans l'ensemble des tuyères. Il existe aussi des installations où le débit global ainsi que les débits individuels sont contrôlés.

Le document JP58011421 propose un dispositif qui est apte à effectuer une dépressurisation d'un réservoir de stockage temporaire sous pression de matière granuleuse pour créer une perte de charge dans la tuyauterie.

Les installations de transport et d'injection doivent permettre, d'une part, un contrôle du débit de matériau injecté et d'autre part, une alimentation continue de matériau pulvérulent. A cette fin, comme représenté dans la figure 1, pour chaque ligne de transport, on utilise classiquement un jeu d'au moins deux silos d'envoi 3 situés en parallèle dans la ligne de transport et pourvus de vannes de fermeture 4, 5 permettant de contrôler le remplissage et la vidange de chaque silo. Lesdits silos d'envoi 3 sont utilisés alternativement, l'un étant en cours de vidange pour assurer l'alimentation en charbon vers la tuyère du haut-fourneau pendant que l'autre est rempli à partir du silo de stockage principal. Par ailleurs, chaque silo d'envoi est pourvu de moyen de pesage 6 permettant de déterminer la quantité de charbon pulvérulent introduit à chaque remplissage, et donc permettant de contrôler la quantité de charbon injecté.

Lors du remplissage d'un silo d'envoi à partir du silo principal, pour éviter une surpression qui pourrait empêcher le charbon de bien couler, le gaz contenu dans le silo d'envoi est évacué vers la partie supérieure du silo principal par un conduit d'égalisation de pression pourvue d'une vanne d'isolement 16 qui est ouverte lors de ce remplissage. Comme ce conduit se retrouve fermé par la vanne 16 lorsque le remplissage du silo d'envoi est terminé, il reste donc rempli de gaz humide contenant du charbon pulvérisé. Pour éviter les risques de condensation et de colmatage de charbon, voire blocage de la ligne, qui peuvent en résulter, ces conduits sont isolés et chauffés.

Pour assurer la vidange de chaque silo d'envoi par transport pneumatique du charbon pulvérulent, ces silos sont alimentés en gaz sous pression via une conduite pourvu d'une vanne 7 permettant de maintenir la pression requise au transport pendant toute la durée de la vidange. Ces silos d'envoi, maintenus sous pression pendant leur utilisation, nécessitent donc d'être périodiquement dépressurisés avant chaque nouveau remplissage à partir du silo de stockage principal. Inévitablement, le gaz s'échappant du silo lors de la dépressurisation entraîne du produit pulvérulent encore contenu dans ledit silo. Pour éviter de rejeter dans l'atmosphère, avec le gaz sous pression, des quantités importantes de charbon pulvérulent lors de la dépressurisation, on utilise classiquement des filtres à manches. Typiquement, chaque silo d'envoi est relié par un conduit de dépressurisation pourvu d'une vanne 8 à un filtre à manches 9 situé sur le silo de stockage principal 1, ce qui permet de récupérer directement dans ledit silo principal le charbon pulvérulent retenu par le filtre à manches, le gaz étant évacué, selon la flèche F, dans l'atmosphère ou récupéré par ailleurs. Puisque le silo principal est à pression atmosphérique, le filtre est donc lui aussi sous pression atmosphérique, la chute de pression résultant de la perte de charge entre le silo d'envoi 3 et le filtre à manches 9, et pouvant être contrôlée par la vanne 8 de dépressurisation placée sur le conduit reliant ces derniers.

Au cours de la dépressurisation, la pression dans le silo d'envoi décroît progressivement. Par ailleurs, les filtres à manches autorisent un débit volumique maximal, déterminé par l'aire de la surface de filtration du filtre. Pour optimiser la dépressurisation, il est donc recherché de conserver un débit volumique le plus constant possible à travers le filtre pendant toute la dépressurisation, ce qui permet de minimiser la surface de filtration nécessaire, donc la dimension globale des filtres et leur coût. La régulation de débit assurée par la vanne 8 placée sur le conduit entre le silo d'envoi 3 et le filtre à manches 9 permet d'assurer la constance souhaitée du débit.

Un inconvénient de ces systèmes réside dans le fait que ladite vanne 8 de régulation travaille donc nécessairement sur des flux gazeux chargés en matière pulvérulente. Un autre inconvénient résulte du fait que, dans une installation typique de haut-fourneau, plusieurs lignes d'injection comportant chacune deux, voire trois, silos de dosage sont reliées sur le même filtre à manches à basse pression, et, en conséquence, des variations de pression dans une conduite reliant au filtre un silo d'envoi en cours de dépressurisation peuvent avoir une incidence perturbatrice sur l'équipement de pesage des autres silos d'envoi, et notamment du silo d'envoi en cours d'injection.

Un autre inconvénient résulte du fait que, lors de la dépressurisation, une certaine quantité de charbon pulvérulent est renvoyée avec le flux de gaz de dépressurisation, vers le filtre à manche, puis vers le silo de stockage principal. Or cette quantité ne peut pas être précisément déterminée. Il en résulte que non seulement la quantité réelle de charbon injecté aux tuyères est inférieure à la quantité relevée par les pesées du silo d'envoi, mais également elle est inconnue précisément.

Un autre inconvénient encore provient du fait que les conduites entre les vannes de dépressurisation et le filtre à manches sont relativement longues et de grand diamètre, ce qui entraîne un coût de matériel important.
JP 58 011421 décrit une installation de distribution de matière granuleuse ou pulvérulente qui est apte à effectuer une dépressurisation d'un réservoir de stockage temporaire sous pression de matière granuleuse. Cette installation comprend un conduit apte à la dépressurisation et un filtre à manches connecté au conduit et apte à travailler sous pression. L'installation comprend en outre une vanne de régulation de débit en aval du filtre à manches qui peut être opéré afin de laisser passer un débit maximal égal ou inférieur au débit maximal du filtre à manches. Une telle vanne est cependant exposée à des conditions de travail très difficiles en raison des hautes pressions et températures et de la nature de la matière traversant la vanne.

### Objet de l'invention

Un objet de la présente invention est de résoudre les problèmes mentionnés ci-dessus et de supprimer ou au moins limiter les inconvénients des installations selon l'art antérieur.

### Description générale de l'invention

Avec ces objectifs en vue, l'invention à pour objet une installation de distribution de matière granuleuse ou pulvérulente par transport pneumatique comportant au moins un silo d'envoi pour assurer un stockage temporaire de ladite matière granuleuse ou pulvérulente, le silo d'envoi étant adapté pour, alternativement, être mis sous pression pour assurer la vidange du silo d'envoi et être dépressurisé pour permettre son remplissage, et un dispositif de dépressurisation dudit silo d'envoi, comportant
- un conduit de dépressurisation connecté audit silo d'envoi, et
- un filtre à manches, ayant un débit maximal de fonctionnement, connecté sur le conduit de dépressurisation, c'est-à-dire soit placé en série sur ce conduit soit connecté directement sur le silo d'envoi et en amont du dit conduit, et
- des moyens de régulation du débit pour réguler le débit dans ledit conduit de dépressurisation, à travers le filtre à manches.

Selon l'invention, l'installation est caractérisée en ce que le filtre à manches est un filtre adapté pour travailler sous pression, et les moyens de régulation de débit sont situés sur le conduit de dépressurisation en aval du filtre à manche et agencés pour assurer un débit au plus égal au débit maximal du filtre à manche.

Un avantage est que les moyens de régulation de débit, alors situés après le filtre, sont traversés par un flux de gaz dépoussiéré et donc sans risques d'abrasion, de colmatage et de réduction de section, et donc de débit, qui pourraient en résulter.

Selon une disposition particulière, l'installation comporte un silo de stockage principal et plusieurs silos d'envoi reliés au silo de stockage principal pour être remplis périodiquement en matière granuleuse ou pulvérulente par transport pneumatique à partir du silo principal, et chaque silo d'envoi comporte son propre dispositif de dépressurisation, avec un filtre à manches sous pression monté directement sur chaque silo d'envoi.

Comparativement aux dispositifs selon l'art antérieur utilisant un filtre à manches fonctionnant sous pression atmosphérique monté sur le silo de stockage principal, la disposition selon l'invention présente plusieurs avantages :

Il n'y a plus besoin, entre le silo d'envoi et le filtre à manches, de conduits de dépressurisation de grand diamètre, typiquement DN 400, ni de conduits d'égalisation de pression, typiquement de diamètre DN 200, ce qui peut permettre, pour une installation de haut-fourneau typique, une réduction de poids de l'ordre de 4 tonnes par silo d'envoi.

De plus, il n'y a donc plus de risque de bouchage des conduits d'égalisation de pression, et il n'est plus besoin de prévoir d'isolation thermique et de suivi de la température de ces conduits.

Puisque le charbon pulvérulent retenu par le filtre à manches de chaque silo d'envoi est retourné directement dans ledit silo, et non dans le silo de stockage principal, la mesure de masse réelle de charbon injecté n'est plus faussée.

Il n'y a plus d'incidence de la dépressurisation d'un silo d'envoi sur le système de pesée d'un autre silo d'envoi. En effet, dans les systèmes selon l'art antérieur utilisant un filtre à manches situé au sommet du silo de stockage principal et commun pour plusieurs silos d'envoi, tous les silos d'envoi sont reliés via leurs conduits de dépressurisation respectifs menant à ce filtre. De ce fait, la dépressurisation d'un des silos d'envoi influe sur les systèmes de pesée des autres silos d'envoi, du fait de la pression de retour du filtre à manches qui a un effet sur les vannes de dépressurisation des autres silos d'envoi. En utilisant un filtre à manches par silo d'envoi, ce problème est supprimé.

Selon un premier mode de réalisation, les moyens de régulation de débit comportent une plaque avec un orifice de section prédéterminée, adaptée pour laisser passer un débit volumique maximal égal ou inférieur au débit maximal autorisé pour le filtre à manches.

Selon un autre mode de réalisation préférentiel, les moyens de régulation de débit comportent une tuyère de Laval, de section et forme prédéterminée, adaptée pour laisser passer un débit volumique maximal égal ou inférieur au débit maximal autorisé pour le filtre à manches.

Aussi longtemps que l'expansion du mélange de gaz et de produit pulvérulent dans l'orifice ou la tuyère de Laval est critique, ces derniers produisent un débit volumique effectif constant à travers le filtre à manches situé en amont, dans la mesure où la dépressurisation à lieu à une température sensiblement constante.

Lorsque la pression à l'entrée de la tuyère de Laval, ou en amont de l'orifice, décroît continûment du fait de la dépressurisation du silo, le débit massique du mélange de gaz et de produit pulvérulent décroît également de manière proportionnelle. Par contre, le débit volumique reste constant indépendamment de la pression en amont de la tuyère de Laval ou de l'orifice de la plaque, tant que la température du gaz en amont est maintenue constante.

Ainsi, du fait de l'utilisation de moyens de régulation statiques, sans éléments mobiles, tels que la plaque avec un orifice ou la tuyère de Laval, il n'y a plus besoin des vannes régulées de dépressurisation selon l'art antérieur, ce qui peut se traduire par une économie importante par silo.

### Brève description des dessins

D'autres particularités et caractéristiques de l'invention ressortiront de la description d'un mode de réalisation présenté ci-dessous, à titre d'illustration, en se référant aux dessins annexés. Ceux-ci montrent:
Fig. 1: une vue schématique simplifiée d'une installation d'injection de charbon dans un haut-fourneau selon l'art antérieur, qui a déjà été décrite et commentée dans le préambule de ce mémoire ;
Fig. 2a et Fig. 2b: des vues schématiques simplifiées de deux variantes d'un silo d'envoi d'une installation correspondante selon l'invention.

### Description d'une exécution préférée

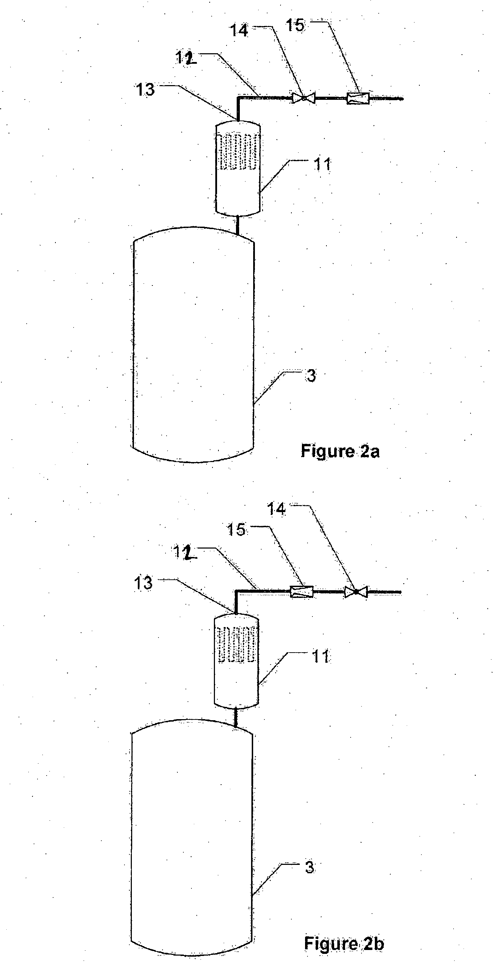

Dans le dispositif selon l'invention représenté dans les figures 2a et 2b, le silo d'envoi 3 est pourvu d'un filtre à manches 11 prévu pour travailler sous pression. A cette fin, l'enveloppe du filtre à manche sera renforcée pour tenir compte de la pression plus élevée résultant du fait que le filtre est placé en amont des moyens de régulation de débit, donc sous une pression relativement élevée pouvant atteindre 25 bars. De plus, l'enveloppe du filtre sera dimensionnée en tenant compte aussi des contraintes de fatigue résultant du fonctionnement cyclique, l'enveloppe se trouvant pressurisée et dépressurisée selon des cycles de l'ordre de 12 à 15 minutes, soit typiquement 4 à 5 fois par heure, et cela pendant de nombreuses années de services. Par ailleurs, la surface filtrante des filtres à manche sera déterminée pour permettre un débit volumique à travers les manches de l'ordre de 2 à 60m³/minute.

Le filtre à manches 11 est fixé directement au sommet du silo 3, de manière que les poussières ou matières pulvérulentes retenues par le filtre puissent retourner directement dans le silo. Une conduite de dépressurisation 12 est raccordée sur la sortie 13 de gaz épurés du filtre. Une vanne d'isolement 14 est montée sur cette conduite, en aval du filtre, pour permettre la fermeture du silo lors de sa mise sous pression pour son utilisation classique lors du transport pneumatique de charbon pulvérulent vers les tuyères ou le point d'injection sur le haut-fourneau. Une tuyère de Laval 15 est disposée sur le conduit de dépressurisation 12 en aval, dans le cas de la figure 2a, ou en amont dans le cas de la figure 2b, de la vanne d'isolement 14. Les caractéristiques dimensionnelles de la tuyère de Laval 15 sont déterminées en fonction du débit nominal du filtre à manches, c'est à dire le débit maximal autorisé à travers les manches filtrantes, pour assurer un débit volumique constant à travers la tuyère, sensiblement égal ou légèrement inférieur audit débit nominal du filtre.

La sortie de la tuyère de Laval peut être directement dans l'atmosphère, le cas échéant par l'intermédiaire d'un silencieux, ou raccordée à une installation de recyclage des gaz filtrés.

Par ailleurs, on notera que, lors du remplissage du silo d'envoi, la vanne 14 sera ouverte pour évacuer les gaz contenus dans le silo d'envoi. C'est d'ailleurs la raison pour laquelle les conduits d'égalisation de pression ne sont plus nécessaires.

Grâce à l'invention, on a pu ainsi remplacer un filtre atmosphérique ayant une surface utile de 75 m² par des filtres équivalents de seulement 10 m², en augmentant toutefois légèrement la charge de surface filtrante.

L'invention n'est pas limitée au mode de réalisation et à l'application particulière concernant l'injection de charbon dans un haut-fourneau. Elle pourra aussi s'appliquer à d'autres installations comportant des silos sous pression contenant des matériaux pulvérulents et nécessitant la dépressurisation périodique de ces silos au travers de filtres à manches.

## Revendications

1. Installation de distribution de matière granuleuse ou pulvérulente par transport pneumatique comportant au moins un silo d'envoi (3) pour assurer un stockage temporaire de ladite matière granuleuse ou pulvérulente, le silo d'envoi étant adapté pour, alternativement, être mis sous pression pour assurer la vidange du silo d'envoi et être dépressurisé pour permettre son remplissage, et un dispositif de dépressurisation dudit silo d'envoi, comportant
- un conduit de dépressurisation (12) connecté audit silo d'envoi,
- un filtre à manches (11), ayant un débit maximal de fonctionnement, connecté sur le conduit de dépressurisation, et
- des moyens de régulation du débit (15) pour réguler le débit dans ledit conduit de dépressurisation, à travers le filtre à manches,
**caractérisé en ce que** le filtre à manches (11) est un filtre adapté pour travailler sous pression, et les moyens de régulation de débit (15) sont des moyens de régulation statiques sans éléments mobiles, situés sur le conduit de dépressurisation (12) en aval du filtre à manches (11) et comportant une plaque avec un orifice de section prédéterminée ou une tuyère de Laval (15) de section et forme prédéterminée, agencées pour laisser passer un débit volumique maximal égal ou inférieur au débit maximal autorisé pour le filtre à manches.

2. Installation selon la revendication 1, dans laquelle les moyens de régulation de débit (15) sont placés sur le conduit de dépressurisation en aval d'une vanne d'isolement (14).

3. Installation selon la revendication 1, dans laquelle les moyens de régulation de débit (15) sont placés sur le conduit de dépressurisation en amont d'une vanne d'isolement (14).

4. Installation selon l'une quelconque des revendications précédentes, **caractérisée en ce qu'**elle est utilisée pour l'injection de charbon pulvérulent dans un haut-fourneau.

5. Installation selon l'une quelconque des revendications précédentes, **caractérisée en ce qu'**elle comporte un silo de stockage principal et plusieurs silos d'envoi (3) reliés au silo de stockage principal pour être remplis périodiquement en matière granuleuse ou pulvérulente par transport pneumatique à partir du silo principal, et chaque silo d'envoi comporte son propre dispositif de dépressurisation, avec un filtre à manches sous pression monté directement sur chaque silo d'envoi.

## Patentansprüche

1. Anlage zum Verteilen körnigen oder pulverförmigen Materials durch pneumatische Förderung, mit mindestens einem Zuführsilo (3) zum vorübergehenden Speichern des körnigen oder pulverförmigen Materials, wobei das Silo geeignet ist, im Wechsel druckbeaufschlagt zu werden, um das Silo zu entleeren, und druckentlastet zu werden, um es zu befüllen, und mit einer Vorrichtung zur Druckentlastung des Zuführsilos, welche aufweist
- eine Druckentlastungsleitung (12), die mit dem Zuführsilo verbunden ist,
- ein Schlauchfilter (11) mit maximaler Durchflussleistung im Betrieb, das mit der Druckentlastungsleitung verbunden ist, und
- Durchflussregelungsmittel (15) zur Regelung des Durchflusses in der Druckentlastungsleitung über das Schlauchfilter,
**dadurch gekennzeichnet, dass** das Schlauchfilter (11) ein zum Arbeiten unter Druck ausgebildeter Filter ist und die Durchflussregelungsmittel (15) statische Regelungsmittel ohne bewegliche Teile sind, die auf der Druckentlastungsleitung (12) hinter dem Schlauchfilter (11) angeordnet sind und eine Platte mit einer Öffnung vorgegebenen Querschnitts oder eine Lavaldüse (15) vorgegebenen Querschnitts und vorgegebener Form aufweisen, die so angeordnet sind, dass sie einen maximalen Volumenstrom durchlassen, der kleiner oder gleich dem maximal zulässigen Volumenstrom für das Schlauchfilter ist.

2. Anlage nach Anspruch 1, bei der die Durchflussregelungsmittel (15) auf der Druckentlastungsleitung hinter einem Absperrventil (14) angeordnet sind.

3. Anlage nach Anspruch 1, bei der die Durchflussregelungsmittel (15) auf der Druckentlastungsleitung vor einem Absperrventil (14) angeordnet sind.

4. Anlage nach irgendeinem der vorhergehenden Ansprüche, **dadurch gekennzeichnet, dass** sie zum Einspeisen pulverförmiger Kohle in einen Hochofen verwendet wird.

5. Anlage nach irgendeinem der vorhergehenden Ansprüche, **dadurch gekennzeichnet, dass** sie ein Hauptspeichersilo und mehrere Zuführsilos (3) aufweist, welche mit dem Hauptspeichersilo zur regelmäßigen Befüllung mit körnigem oder pulverförmigem Material durch pneumatische Förderung aus dem Hauptsilo verbunden sind, und jedes Zuführsilo seine eigene Druckentlastungsvorrichtung mit einem druckbeaufschlagten, direkt an jedem Zuführsilo angebrachten Schlauchfilter aufweist.

## Claims

1. An installation for distribution of granular or powder material via pneumatic transport comprising at least one dispensing hopper (3) for temporary storage of said granular or powder material, the dispensing hopper being suited to being, alternately, pressurized for emptying the dispensing hopper and depressurized to permit filling thereof, and a device for depressurizing said dispensing hopper, comprising
- a depressurizing duct (12) connected to said dispensing hopper,
- a bag filter (11), having a maximum operating flow rate, connected to said depressurizing duct, and
- flow control means (15) for controlling the flow rate in said depressurizing duct through the bag filter,
**characterized in that** the bag filter (11) is a filter suited to operating under pressure, and the flow control means (15) are static control means without moving elements, located on the depressurizing duct (12) downstream of the bag filter (11) and comprise a plate with an orifice of predetermined cross-section or a de Laval nozzle (15) of a predetermined cross-section and shape, arranged to permitting the passage of a maximum volumetric flow rate which is less than or equal to the maximum admissible flow rate for the bag filter..

2. An installation according to claim 1, wherein the flow control means (15) are placed on the depressurizing duct downstream of an isolation valve (14).

3. An installation according to claim 1, wherein the flow control means (15) are placed on the depressurizing duct upstream of an isolation valve (14).

4. An installation according to any one of the preceding claims, **characterised in that** it is used for injecting powdered coal into a blast furnace.

5. An installation according to any one of the preceding claims, **characterised in that** it comprises a main storage hopper and a plurality of dispensing hoppers (3) connected to the main storage hopper in order to be filled periodically with granular or powder material via pneumatic transport from the main hopper, and each dispensing hopper comprises its own depressurizing device, with a pressurized bag filter mounted directly on each dispensing hopper.
